# EUROPÄISCHE PATENTSCHRIFT

(11) **EP 1 503 098 B1**
(45) Veröffentlichungstag und Bekanntmachung des Hinweises auf die Patenterteilung: **06.08.2008**
(21) Anmeldenummer: 04016899.9
(22) Anmeldetag: 17.07.2004
(51) Int. Cl.: F16D 13/58, F16D 23/12

(54) **Reibungskupplung mit einem als Blechstanzteil einstückig ausgebildeten Ausrückhebel-Widerlager.**
Friction clutch with a release lever support made from a single sheet metal punching.
Embrayage à friction avec support de levier de dégagement constitué d'une pièce unique de tôle estampée.

(30) Priorität: 01.08.2003 DE 10335412
(43) Veröffentlichungstag der Anmeldung: 02.02.2005
(73) Patentinhaber: LuK Lamellen und Kupplungsbau Beteiligungs KG, 77815 Bühl (DE)
(72) Erfinder: Gander, Gerhard, 77830 Bühlertal (DE); Weydmann, Patrick, 77815 Bühl (DE)

(56) Entgegenhaltungen:
- DE-A- 1 752 986
- DE-A- 2 429 603
- GB-A- 1 444 116
- US-A- 4 238 019
- US-A- 4 256 210
- US-A- 4 793 456

## Beschreibung

Die Erfindung betrifft entsprechend dem Oberbegriff des Anspruchs 1 eine Reibungskupplung mit einem Kupplungsgehäuse, an dem mindestens ein Hebel schwenkbar gelagert ist, der zur Betätigung einer Druckplatte mit einem Druckhebel gekoppelt ist, siehe US-A-4 238 019, Fig. 3 und 4, oder US-A-4 256 210, Fig. 5 und 6 z.B.

Herkömmliche Reibungskupplungen sind oft mit geschmiedeten Druckhebeln ausgestattet, die aufwendig bearbeitet werden müssen. Darüber hinaus werden Druckhebel verwendet, die aus mehreren Stanzteilen bestehen, deren Zusammenbau zu einer Erhöhung der Herstellkosten führt.

Aufgabe der Erfindung ist es daher, eine derartige Reibungskupplung zu schaffen, die einfach aufgebaut und kostengünstig herstellbar ist.

Die Aufgabe ist bei gemäß dem Kennzeichen des Anspruchs 1 gelöst. . Dadurch kann eine nachträgliche Bearbeitung, wie sie bei Schmiedeteilen erforderlich ist, entfalten.

Durch die Verdickung wird der Druckhebel im Bereich des Sacklochs verstärkt.

Der gestanzte Druckhebel ist vorzugsweise werkzeugfallend ausgebildet, so dass er nach dem Formvorgang aufgrund seines Eigengewichts aus dem Werkzeug der zum Stanzen verwendeten Presse herausfällt.

Ein bevorzugtes Ausführungsbeispiel der Reibungskupplung ist dadurch gekennzeichnet, dass das Sackloch so geformt ist, dass das das Sackloch umgebende Material verdichtet ist. Durch die Materialverdichtung in der Umgebung des Sacklochs wird auch ohne eine aufwendige Warmbehandlung des Druckhebels eine ausreichende Festigkeit erreicht.

Ein weiteres bevorzugtes Ausführungsbeispiel der Reibungskupplung ist dadurch gekennzeichnet, dass an dem Druckhebel im Bereich des Durchgangslochs auf einer Seite ein Kragen geformt ist. Durch den angeformten Kragen wird die Länge des Durchgangslochs vergrößert. Dadurch wird im eingebauten Zustand des Druckhebels eine bessere Abstützung erreicht.

Ein weiteres bevorzugtes Ausführungsbeispiel der Reibungskupplung ist dadurch gekennzeichnet, dass der Druckhebel zwischen dem Sackloch und dem Durchgangsloch einen Versatz aufweist. Durch den Versatz wird erreicht, dass die beiden Enden des Druckhebels eine gemeinsame Längsachse aufweisen, obwohl sie unterschiedlich ausgebildet sind. Die Achse an dem Ende des Druckhebels mit dem Durchgangsloch, das durch den Kragen verlängert ist, fluchtet mit der Achse an dem Ende des Druckhebels, das im Bereich des Sacklochs verdickt ist.

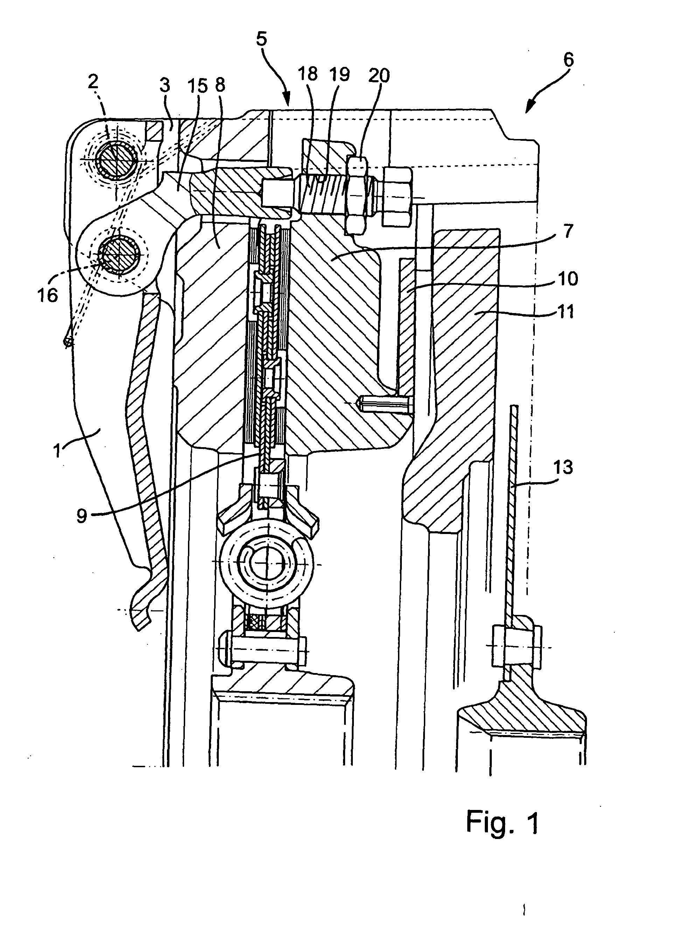

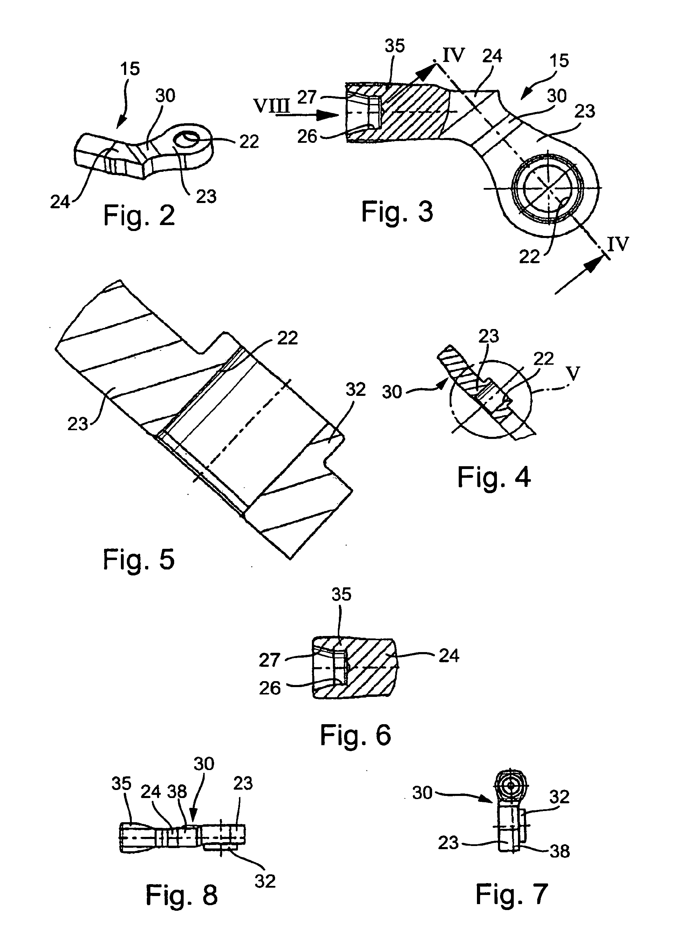

Die Erfindung betrifft auch entsprechend dem Oberbegriff des Anspruchs 5 eine Reibungskupplung, mit einem Kupplungsgehäuse, an dem mindestens ein Hebel schwenkbar gelagert ist, der zur Betätigung einer Druckplatte mit einer Augenschraube zusammenwirkt, vgl. US-A-4 238 019, Fig. 1 und 2.

Herkömmliche Reibungskupplungen sind oft mit mehrteiligen Augenschrauben ausgestattet, deren Einzelteile aufwendig bearbeitet und zusammengebaut werden müssen.

Aufgabe der Erfindung ist es daher auch eine derartige Reibungskupplung zu schaffen, die einfach aufgebaut und kostengünstig herstellbar ist.

Die Aufgabe ist bei einer Reibungskupplung gemäß dem Kennzeichen des Anspruchs 5 gelöst. Das liefert den Vorteil, dass die aufwendige Bearbeitung und Montage einzelner Teile entfallen können. Die gestanzte Augenschraube ist vorzugsweise werkzeugfallend ausgebildet, so dass sie von selbst aus dem Werkzeug der zum Stanzen verwendeten Presse herausfällt.

Dadurch, dass an der Augenschraube zwischen dem Gewinde und dem Durchgangsloch eine umlaufende Schulter geformt ist, bildet die Schulter im eingebauten Zustand der Augenschraube einen Anschlag für eine Feder.

Ein bevorzugtes Ausführungsbeispiel der Reibungskupplung ist dadurch gekennzeichnet, dass an der Augenschraube im Bereich des Durchgangslochs auf einer Seite ein Kragen geformt ist. Durch den angeformten Kragen wird die Länge des Durchgangslochs vergrößert. Dadurch wird im eingebauten Zustand der Augenschraube eine bessere Abstützung erreicht.

Ein weiteres bevorzugtes Ausführungsbeispiel der Reibungskupplung ist dadurch gekennzeichnet, dass die Augenschraube zwischen dem Gewinde und dem Durchgangsloch einen Versatz aufweist. Durch den Versatz wird erreicht, dass die beiden Enden der Augenschraube eine gemeinsame Längsachse aufweisen, obwohl sie unterschiedlich ausgebildet sind. Die Achse an dem Ende der Augenschraube mit dem Durchgangsloch, das durch den Kragen verlängert ist, fluchtet mit der Achse an dem Ende der Augenschraube, das mit dem Gewinde ausgestattet ist.

Ein weiteres bevorzugtes Ausführungsbeispiel der Reibungskupplung ist dadurch gekennzeichnet, dass das Gewinde nur an zwei entgegengesetzten Seiten an einem Ende der Augenschraube angeprägt ist. Das nicht vollständig, sondern nur teilweise ausgebildete Gewinde reicht aus, um eine Mutter sicher am Ende der Augenschraube zu befestigen.

Weitere Vorteile, Merkmale und Einzelheiten der Erfindung ergeben sich aus der nachfolgenden Beschreibung, in der unter Bezugnahme auf die Zeichnung verschiedene Ausführungsbeispiele im Einzelnen beschrieben sind. Dabei können die in den Ansprüchen und in der Beschreibung erwähnten Merkmale jeweils einzeln für sich oder in beliebiger Kombination erfindungswesentlich sein. Es zeigen:
- Figur 1: einen Ausschnitt aus einer Reibungskupplung mit einem erfindungsgemäßen Druckhebel;
- Figur 2: den Druckhebel aus Figur 1 in perspektivischer Ansicht;
- Figur 3: den Druckhebel aus Figur 2 in der Draufsicht;
- Figur 4: die Ansicht eines Schnitts entlang der Linie IV - IV in Figur 3;
- Figur 5: einen vergrößerten Ausschnitt V aus Figur 4;
- Figur 6: einen Ausschnitt des Endes mit dem Sackloch aus Figur 3;
- Figur 7: eine Ansicht in Richtung des Pfeils VII in Figur 3;
- Figur 8: eine Ansicht in Richtung des Pfeils VIII in Figur 3;

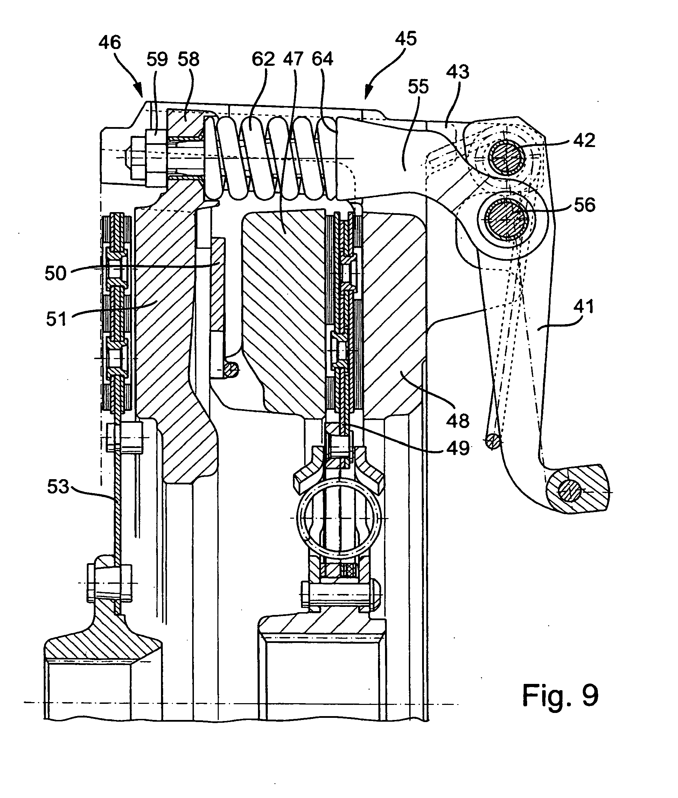

- Figur 9: einen Ausschnitt einer Reibungskupplung mit einer erfindungsgemäßen Augenschraube;

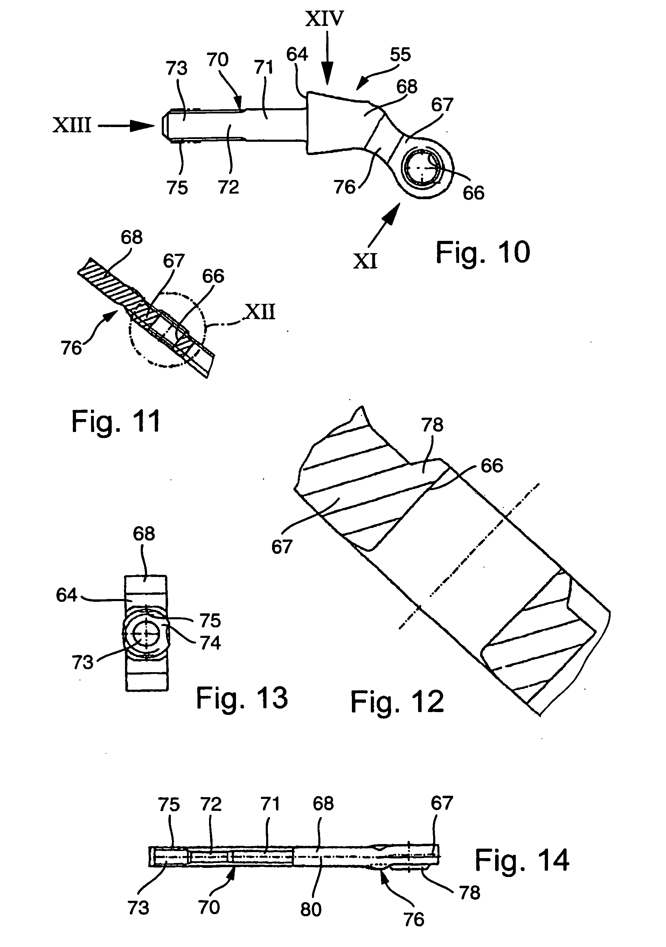

- Figur 10: die Augenschraube aus Figur 9 in der Draufsicht;
- Figur 11: eine Ansicht in Richtung des Pfeils XI in Figur 10;
- Figur 12: einen vergrößerten Ausschnitt XII aus Figur 11;
- Figur 13: eine Ansicht in Richtung des Pfeils XIII in Figur 10;
- Figur 14: eine Ansicht in Richtung des Pfeils XIV in Figur 10.

In Figur 1 ist eine Doppelkupplung im Schnitt dargestellt, deren Betätigungssystem einen Hebel 1 umfasst, der mit Hilfe eines Bolzens 2 schwenkbar an einem Gehäuse 3 angebracht ist. Die Doppelkupplung umfasst eine erste Kupplung 5 und eine zweite Kupplung 6. Die erste Kupplung 5 umfasst eine Druckplatte 7 und eine Gegenduckplatte 8, zwischen denen eine erste Kupplungsscheibe 9 mit Reibbelägen einklemm bar ist. Die Druckplatte 7 ist durch eine Tellerfeder 10 beaufschlagt, deren andere Seite an einer Druckplatte 11 der zweiten Kupplung 6 anliegt. Zwischen der Druckplatte 11 und einer zugehörigen (nicht dargestellten) Gegendruckplatte ist eine zweite Kupplungsscheibe 13 einklemmbar.

An dem Betätigungshebel 1 ist ein Druckhebel 15 mit Hilfe eines Bolzens 16 schwenkbar gelagert. Das freie Ende des Druckhebels 15 wirkt mit einer Anschlagschraube 18 zusammen, die in eine Gewindebohrung 19 eingeschraubt ist, die radial außen an der Druckplatte 7 vorgesehen ist. Die Anschlagschraube 18 ist mit Hilfe einer Kontermutter 20 in der Gewindebohrung 19 fixiert.

In den Figuren 2 und 3 sieht man, dass an einem Ende des Druckhebels 15 ein Durchgangsloch 22 zur Durchführung des Bolzens ausgespart ist. Das Durchgangsloch 22 ist im Bereich eines Auges 23 ausgebildet, von dem ein Arm 24 abgewinkelt ist. Der Winkel zwischen der Längsachse des Arms 24 und des Auges 23 beträgt etwa 130 bis 140 Grad. In dem Ende des freien Endes des Arms 24 ist ein Sackloch 26 ausgebildet, das mit einer Senkung 27 versehen ist. Die Längsachse des Sacklochs 26 fällt mit der Längsachse des Arms 24 zusammen. Die Längsachse des Durchgangslochs 22 ist senkrecht zu der Längsachse des Auges 23 angeordnet. Darüber hinaus ist die Längsachse des Sacklochs 26 ebenfalls senkrecht zu der Längsachse des Durchgangslochs 22 angeordnet.

Insbesondere in Figur 4 sieht man, dass in dem Sackloch 26 und dem Durchgangsloch 22 am Ende des Auges 23 ein Versatz 30 ausgebildet ist. Dabei bedeutet Versatz, dass sich der Druckhebel 15 nicht in einer Ebene erstreckt, sondern zunächst in einer ersten Ebene, dann schräg verläuft, und sich dann in einer zweiten Ebene erstreckt, die parallel zu der ersten Ebene angeordnet ist.

In Figur 5 sieht man, dass im Bereich des Durchgangslochs 22 an dem Auge 23 ein Kragen 32 ausgebildet ist, der sich von einer Seite des Auges 23 nach außen erstreckt. Durch den Kragen 32 wird die Länge des Durchgangslochs 22 in axialer Richtung vergrößert.

In den Figuren 3 und 6 sieht man, dass der Druckhebel an seinem freien Ende, im Bereich des Sacklochs 26 und der Senkung 27 eine Verdickung 35 aufweist. Die Verdickung 35 ist auf den Formvorgang zur Erzeugung des Sacklochs zurückzuführen.

In den Figuren 7 und 8 sieht man, dass die Längsachsen des Arms 24 und des Auges 23 in einer Ebene liegen. Das wird durch den Versatz 30 erreicht.

In Figur 9 ist eine Doppelkupplung im Schnitt dargestellt, deren Betätigungssystem einen Hebel 41 umfasst, der mit Hilfe eines Bolzens 42 an einem Gehäuse 43 schwenkbar angebracht ist. Die Doppelkupplung umfasst eine erste Kupplung 45 und eine zweite Kupplung 46. Die erste Kupplung 45 umfasst eine Druckplatte 47 und eine Gegendruckplatte 48. Zwischen der Druckplatte 47, die in dem Gehäuse 43 axial begrenzt verlagerbar ist, und der Gegendruckplatte 48 ist eine Kupplungsscheibe 49 mit Reibbelägen einklemmbar. Die Druckplatte 47 ist durch eine Tellerfeder 50 beaufschlagt, deren andere Seite an einer Druckplatte 51 der zweiten Kupplung 46 anliegt. Die Duckplatte 51 wirkt mit einer (nicht dargestellten) Gegendruckplatte zusammen, um eine Kupplungsscheibe 53 mit Reibbelägen einzuklemmen. An dem Hebel 41 ist ein Ende einer Augenschraube 55 mit Hilfe eines Bolzens 56 schwenkbar angebracht. Das andere Ende der Augenschraube 55 ist mit Hilfe einer Mutter 59 an einem Ansatz 58 an der Druckplatte 51 befestigt. Zwischen dem Ansatz 58 der Druckplatte 51 und einer Schulter 64, die an der Augenschraube 55 ausgebildet ist, ist eine Schraubendruckfeder 62 eingespannt.

In Figur 10 sieht man, dass an einem Ende der Augenschraube 55 ein Durchgangsloch 66 für den Bolzen ausgespart ist. Das Durchgangsloch 66 ist von einem Auge 67 umgeben, das in einen Fuß 68 übergeht. Der Fuß 68 ist gegenüber dem Auge 67 leicht abgewinkelt und erweitert sich zur Schulter 64 hin. Von dem Fuß 68 geht ein Stift 70 aus, der drei axiale Abschnitte 71, 72, und 73 mit unterschiedlichen Außendurchmessern aufweist. Der Abschnitt 71 hat den größten und der Abschnitt 73 den kleinsten Außendurchmesser. An dem Abschnitt 73 ist außen ein Gewinde 75 ausgebildet.

In Figur 11 sieht man, dass in dem Übergangsbereich zwischen dem Auge 67 und dem Fuß 68 ein Versatz 76 ausgebildet ist. Dabei bedeutet Versatz, dass sich der Fuß 68 in einer Ebene erstreckt, die parallel zu einer davon beabstandeten Ebene angeordnet ist, in der sich das Auge 67 erstreckt. In dem Übergangsbereich des Versatzes 76 ist die Augenschraube 55 gekrümmt ausgebildet.

In Figur 12 sieht man, dass im Bereich des Durchgangslochs 66 auf einer Seite des Auges 67 ein Kragen 78 ausgebildet ist. Durch den Kragen 78 wird die Länge des Durchgangslochs 66 vergrößert.

In Figur 13 sieht man, dass sich das Gewinde 75 nicht über den gesamten Umfang des axialen Abschnitts 73 erstreckt, sondern lediglich an zwei entgegengesetzten Seiten angeprägt ist. Die beidseitige Anprägung des Gewindes reicht aber aus, um eine sichere Befestigung der zugehörigen Mutter zu gewährleisten.

In Figur 14 sieht man, dass die Ausbildung des Kragens 78 im Bereich des Durchgangslochs durch den Versatz 76 so ausgeglichen wird, dass die Augenschraube 55 eine gemeinsame Achse 80 aufweist.

Die in den Figuren 1 und 9 dargestellten Doppelkupplungen sind mit unterschiedlichen Bezugszeichen versehen. Es wird darauf hingewiesen, dass es sich bei den in den Figuren 1 und 9 dargestellten Doppelkupplungen um ein und dieselbe Kupplung handeln kann, die sowohl mit einer Augenschraube, wie sie in den Figuren 10 bis 14 dargestellt ist als auch mit einem Druckhebel, wie er in den Figuren 2 bis 8 dargestellt ist, ausgestattet ist.

## Patentansprüche

1. Reibungskupplung mit einem Kupplungsgehäuse, an dem mindestens ein Hebel (1) schwenkbar gelagert ist, der zur Betätigung einer Druckplatte (7) mit einem Druckhebel (15) gekoppelt ist, **dadurch gekennzeichnet, dass** der Druckhebel (15) als einstückiges Stanzteil ausgebildet ist, welches mit einem geformten Sackloch (26) an einem Ende und einem geformten Durchgangsloch (22), dessen Längsachse im Wesentlichen senkrecht zu der Längsachse des Sacklochs (26) angeordnet ist, am anderen Ende versehen ist, wobei im Bereich des Durchgangsloches eine Materialverdickung angeformt ist, die das Durchgangsloch verlängert, und der Druckhebel (15) im Bereich des Sacklochs (26) eine Verdickung (35) angeformt hat.

2. Reibungskupplung nach Anspruch 1, **dadurch gekennzeichnet, dass** das Sackloch (26) so geformt ist, dass das das Sackloch umgebende Material verdichtet ist.

3. Reibungskupplung nach einem der vorhergehenden Ansprüche, **dadurch gekennzeichnet, dass** an dem Druckhebel (15) im Bereich des Durchgangslochs (22) auf einer Seite ein Kragen (32) geformt ist.

4. Reibungskupplung nach einem der vorhergehenden Ansprüche, **dadurch gekennzeichnet, dass** der Druckhebel (15) zwischen dem Sackloch (26) und dem Durchgangsloch (22) einen Versatz (30) aufweist.

5. Reibungskupplung mit einem Kupplungsgehäuse (43), an dem mindestens ein Hebel (41) schwenkbar gelagert ist, der zur Betätigung einer Druckplatte (51) mit einer Augenschraube (55) zusammenwirkt, **dadurch gekennzeichnet, dass** die Augenschraube (55) als einstückiges Stanzteil ausgebildet ist, welches mit einem angeformten Gewinde (75) an einem Ende und einem angeformten Durchgangsloch (66), dessen Längsachse im Wesentlichen senkrecht zu der Längsachse des Gewindes (75) angeordnet ist, am anderen Ende versehen ist, wobei im Bereich des Durchgangsloches eine Materialverdickung angeformt ist, die das Durchgangsloch verlängert und dass sich das Gewinde (75) nicht über den gesamten Umfang des dieses aufweisenden Endes erstreckt.

6. Reibungskupplung nach Anspruch 5, **dadurch gekennzeichnet, dass** an der Augenschraube (55) im Bereich des Durchgangslochs (66) auf einer Seite ein Kragen (78) geformt ist.

7. Reibungskupplung nach Anspruch 5 oder 6, **dadurch gekennzeichnet, dass** die Augenschraube (55) zwischen dem Gewinde (75) und dem Durchgangsloch (66) einen Versatz (76) aufweist.

8. Reibungskupplung nach einem der Ansprüche 5 bis 7, **dadurch gekennzeichnet, dass** an der Augenschraube (55) zwischen dem Gewinde (75) und dem Durchgangsloch (66) eine umlaufende Schulter (64) geformt ist.

9. Reibungskupplung nach einem der Ansprüche 5 bis 8, **dadurch gekennzeichnet, dass** das Gewinde (75) nur an zwei entgegengesetzten Seiten an einem Ende der Augenschraube (55) angeprägt ist.

## Claims

1. Friction clutch having a clutch housing on which is pivotably mounted at least one lever (1) which, in order to actuate a pressure plate (7), is coupled to a pressure lever (15), **characterized in that** the pressure lever (15) is formed as a single-piece punched part which is provided with a shaped blind hole (26) at one end and with a shaped through hole (22), whose longitudinal axis is arranged substantially perpendicular to the longitudinal axis of the blind hole (26), at the other end, with a material thickening being integrally formed in the region of the through hole, which material thickening lengthens the through hole, and the pressure lever (15) having a thickening (35) integrally formed in the region of the blind hole (26).

2. Friction clutch according to Claim 1,
**characterized in that** the blind hole (26) is shaped such that the material surrounding the blind hole is compressed.

3. Friction clutch according to one of the preceding claims, **characterized in that** a collar (32) is formed on the pressure lever (15) on one side in the region of the through hole (22).

4. Friction clutch according to one of the preceding claims, **characterized in that** the pressure lever (15) has an offset (30) between the blind hole (26) and the through hole (22).

5. Friction clutch having a clutch housing (43) on which is pivotably mounted at least one lever (41) which, in order to actuate a pressure plate (51), interacts with an eyebolt (55), **characterized in that** the eyebolt (55) is formed as a single-piece punched part which is provided with an integrally formed thread (75) at one end and with an integrally formed through hole (66), whose longitudinal axis is arranged substantially perpendicular to the longitudinal axis of the thread (75), at the other end, with a material thickening being integrally formed in the region of the through hole, which material thickening lengthens the through hole, and **in that** the thread (75) does not extend over the entire periphery of the end which has said thread (75).

6. Friction clutch according to Claim 5, **characterized in that** a collar (78) is formed on the eyebolt (55) on one side in the region of the through hole (66).

7. Friction clutch according to Claim 5 or 6, **characterized in that** the eyebolt (55) has an offset (76) between the thread (75) and the through hole (66).

8. Friction clutch according to one of Claims 5 to 7, **characterized in that** an encircling shoulder (64) is formed on the eyebolt (55) between the thread (75) and the through hole (66).

9. Friction clutch according to one of Claims 5 to 8, **characterized in that** the thread (75) is punched in only on two opposite sides at one end of the eyebolt (55).

## Revendications

1. Embrayage à friction comprenant un carter d'embrayage sur lequel est monté à pivotement au moins un levier (1), qui est accouplé à un levier de pression (15) pour commander une plaque de pression (7), **caractérisé en ce que** le levier de pression (15) est réalisé sous la forme d'une pièce estampée d'une seule pièce qui est pourvue d'un trou borgne façonné (26) à une extrémité et d'un trou traversant façonné (22) à l'autre extrémité, dont l'axe longitudinal est essentiellement perpendiculaire à l'axe longitudinal du trou borgne (26), un épaississement de matière étant formé dans la région du trou traversant, lequel prolonge le trou traversant, et le levier de pression (15) ayant un épaississement (35) façonné dans la région du trou borgne (26).

2. Embrayage à friction selon la revendication 1, **caractérisé en ce que** le trou borgne (26) est formé de telle sorte que la matière entourant le trou borgne soit épaissie.

3. Embrayage à friction selon l'une quelconque des revendications précédentes, **caractérisé en ce qu'**un rebord (32) est formé d'un côté sur le levier de pression (15) dans la région du trou traversant (22).

4. Embrayage à friction selon l'une quelconque des revendications précédentes, **caractérisé en ce que** le levier de pression (15) présente un déport (30) entre le trou borgne (26) et le trou traversant (22).

5. Embrayage à friction comprenant un carter d'embrayage (43), sur lequel au moins un levier (41) est monté à pivotement, lequel coopère avec un boulon à oeillet (55) pour la commande d'une plaque de pression (51), **caractérisé en ce que** le boulon à oeillet (55) est réalisé sous forme de pièce estampée d'une seule pièce, qui est pourvue à une extrémité d'un filetage façonné (75) et à l'autre extrémité d'un trou traversant façonné (66), dont l'axe longitudinal est disposé essentiellement perpendiculairement à l'axe longitudinal du filetage (75), un épaississement de matière étant formé dans la région du trou traversant, lequel prolonge le trou traversant, et **en ce que** le filetage (75) ne s'étend pas sur toute la périphérie de l'extrémité où il est situé.

6. Embrayage à friction selon la revendication 5, **caractérisé en ce qu'**un rebord (78) est formé d'un côté sur le boulon à oeillet (55) dans la région du trou traversant (66).

7. Embrayage à friction selon la revendication 5 ou 6, **caractérisé en ce que** le boulon à oeillet (55) présente un déport (76) entre le filetage (75) et le trou traversant (66).

8. Embrayage à friction selon l'une quelconque des revendications 5 à 7, **caractérisé en ce qu'**un épaulement périphérique (64) est formé sur le boulon à oeillet (55) entre le filetage (75) et le trou traversant (66).

9. Embrayage à friction selon l'une quelconque des revendications 5 à 8, **caractérisé en ce que** le filetage (75) est marqué seulement au niveau de deux côtés opposés sur une extrémité du boulon à oeillet (55).
